# EUROPÄISCHE PATENTSCHRIFT

(11) **EP 0 903 278 B1**
(45) Veröffentlichungstag und Bekanntmachung des Hinweises auf die Patenterteilung: **06.05.2004**
(21) Anmeldenummer: 98117518.5
(22) Anmeldetag: 15.09.1998
(51) Int. Cl.: B62B 5/02

(54) **Transportvorrichtung mit motorisch angetriebener Treppensteigvorrichtung**
Transportation device with motor driven stair climbing device
Dispositif de transport comprenant des moyens motorisés pour grimper des escaliers

(30) Priorität: 19.09.1997 DE 19745153
(43) Veröffentlichungstag der Anmeldung: 24.03.1999
(73) Patentinhaber: Alber Antriebstechnik GmbH, 72458 Albstadt (DE)
(72) Erfinder: Alber, Ulrich, 72459 Albstadt (DE)
(74) Vertreter: Möbus, Daniela, Dr.-Ing.

(56) Entgegenhaltungen:
- DE-A- 19 519 109
- DE-A- 19 614 319

## Beschreibung

Die Erfindung betrifft eine Transportvorrichtung mit an einem Gestell angeordneten Laufrädern und einer elektromotorisch angetriebenen Treppensteigvorrichtung.

Eine solche Transportvorrichtung mit einer Treppensteigvorrichtung in besonders kompakter Bauweise ist bereits aus der EP-A-0 800 977 (DE 196 14 319.5)bekannt. Die Treppensteigvorrichtung dieser bekannten Transportvorrichtung weist Träger mit Stützrollen auf, die die erforderliche Hub- und horizontale Schrittbewegung der Vorrichtung vornehmen. Die Horizontalbewegung ist dabei jedoch relativ groß, wodurch hohe Lastveränderungen an den Handgriffen einer beispielsweise als Sackkarre ausgebildeten Transportvorrichtung entstehen.

DE-A-195 19 109 zeigt eine Transportvorrichtung mit an einem Gestell angeordneten Laufrädern und einer elektromotorisch angetriebenen Steigvorrichtung, bei der der Elektromotor der Treppensteigvorrichtung eine Welle antreibt, an deren Ende Kurbelarme befestigt sind, die drehbar an Trägern mit an ihrem unteren Ende befestigten Stützrädern gelagert sind, wobei die Träger linear an der Vorrichtung geführt sind.

Der vorliegenden Erfindung liegt die Aufgabe zugrunde, eine Transportvorrichtung mit einer verringerten horizontalen Bewegungskomponente zu schaffen.

Die Aufgabe wird mit einer Transportvorrichtung mit an einem Gestell angeordneten Laufrädern und einer elektromotorisch angetriebenen Treppensteigvorrichtung gelöst, wobei der Elektromotor der Treppensteigvorrichtung erste Exzenterhebel antreibt, an denen jeweils zweite Exzenterhebel drehbar gelagert sind, die mit ihren Enden an Trägern mit an ihrem unteren Ende angeordneten Stützfüßen oder -rollen drehbar gelagert sind, wobei die Träger linear an der Vorrichtung geführt sind und zwischen den ersten und zweiten Exzenterhebeln Getriebe mit einem Übersetzungsverhältnis von 1:2 angeordnet sind. Die Getriebe mit einem Übersetzungsverhältnis von 1:2 bewirken, daß bei einer Drehung der ersten Exzenterhebel um 90° die zweiten Exzenterhebel eine Drehung um 180° durchführen. Dadurch läßt sich erreichen, daß bei horizontal gerichteten ersten Exzenterhebeln die zweiten Exzenterhebel mit ihren Enden, mit denen sie an den Trägern angelenkt sind, in Richtung auf den Drehpunkt der großen Exzenterhebel gerichtet sind. Die Träger befinden sich somit mit ihren Anlenkpunkten in einem Abstand von den Drehpunkten der ersten Exzenterhebel, der geringer ist als die Länge der Hebel. Bei vertikal gerichteten großen Exzenterhebeln hingegen verlängern die zweiten Exzenterhebel die ersten Hebel, womit insgesamt ein sehr hoher Hub erreicht wird. Die im Vergleich zu den bekannten Vorrichtungen geringere Horizontalbewegung der Träger macht sich durch Reduzierung der Lastveränderungen an den Handgriffen der Transportvorrichtung vorteilhaft bemerkbar. Die Bedienung der Vorrichtung vereinfacht sich dadurch und wird deutlich komfortabler. Als Getriebe zwischen den Exzenterhebeln können Stirnradgetriebe oder aber auch Kettenradgetriebe eingesetzt werden. Die Träger können mittels Führungsrollen in Schienen an der Vorrichtung geführt sein. Aber auch der Einsatz von Teleskop-Führungen oder dergleichen ist denkbar. Für eine optimale Schrittbewegung der Träger können diese im Bereich der Anlenkung der zweiten Exzenterhebel leicht abgewinkelt sein. Zweckmäßigerweise können die Laufräder an Achszapfen des Gestells gelagert sein, während die Treppensteigvorrichtung zwischen den Laufrädern am Gestell angeordnet ist. Die Treppensteigvorrichtung ragt somit nicht seitlich über die Vorrichtung hinaus. Weitere Vorteile lassen sich dadurch erzielen, daß die Exzenterhebel so bemessen werden, daß sie in radialer Richtung nicht über die Laufräder vorstehen. Dadurch werden Kollisionen der Hebel mit den Kanten von Treppenstufen zuverlässig verhindert.

Nachfolgend wird ein bevorzugtes Ausführungsbeispiel einer Transportvorrichtung anhand der Zeichnung näher beschrieben.

Es zeigen:
- Fig. 1: eine Teil-Seitenansicht auf eine Transportvorrichtung mit einer Treppensteigvorrichtung;
- Fig. 2: eine Ansicht von hinten auf die Transportvorrichtung nach Fig. 1;
- Fig. 3 bis 10: Seitenansichten der Transportvorrichtung nach Fig. 1 mit Last in verschiedenen Positionen beim Steigen einer Treppenstufe.

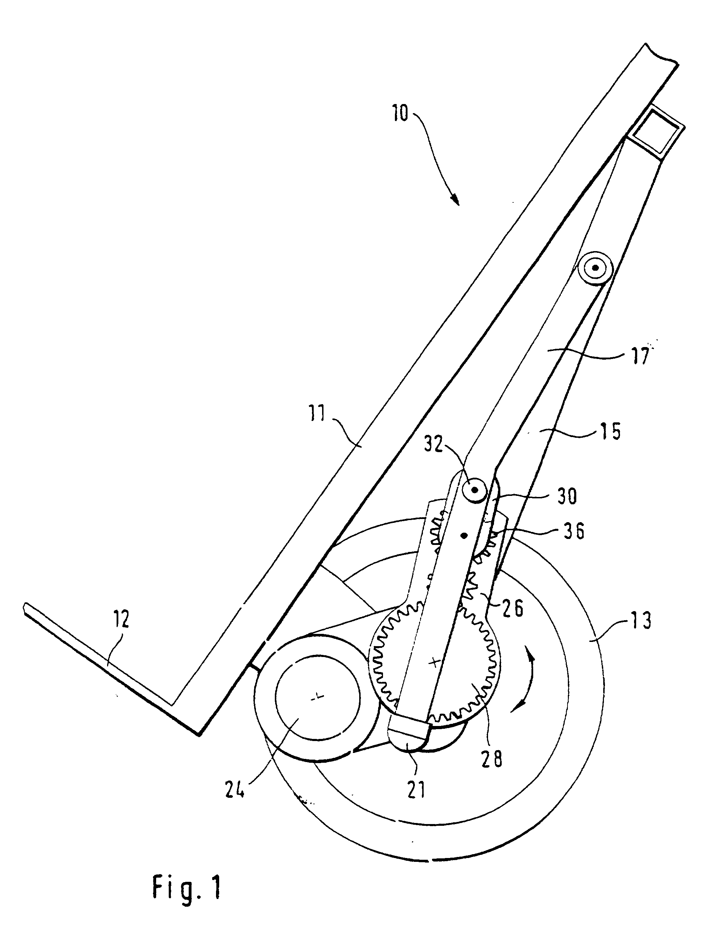

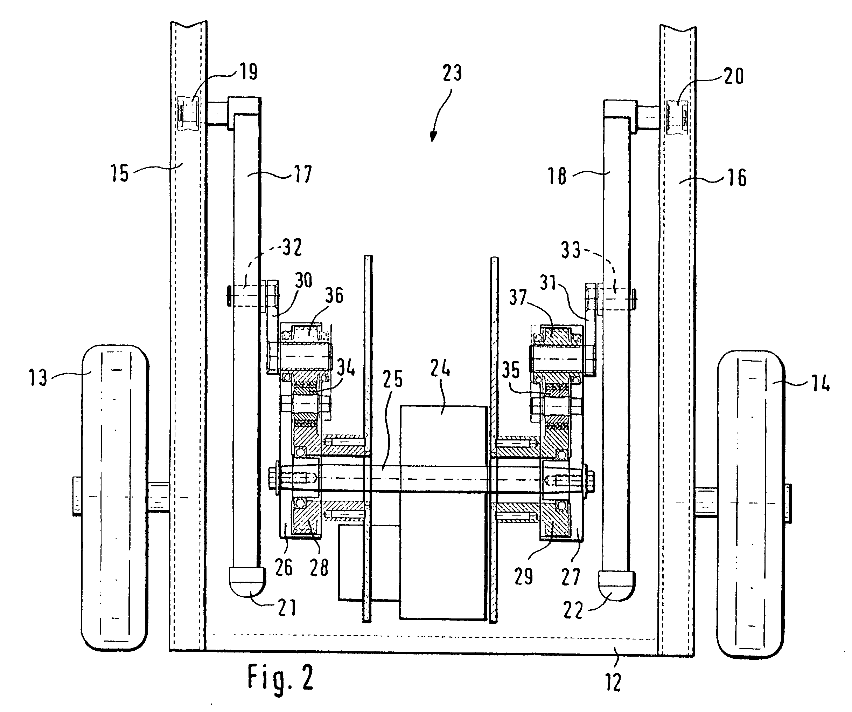

Die Transportvorrichtung 10 nach den Figuren 1 und 2 weist ein Gestell 11 mit einer Bodenplatte 12 zur Aufnahme von Lasten und Laufrädern 13 und 14 auf. Das Gestell 11 ist außerdem mit Führungsschienen 15, 16 für Träger 17, 18 versehen. Die Träger 17 und 18 gleiten dabei mittels Führungsrollen 19, 20 in den Schienen 15, 16. An ihren unteren Enden sind die Träger 17 und 18 mit Stützfüßen 21 und 22 versehen. Wie insbesondere aus Fig. 2 ersichtlich ist, sind die Träger 17 und 18 Teil einer Treppensteigvorrichtung 23, die zwischen den Schienen 15 und 16 angeordnet ist. Die Treppensteigvorrichtung 23 weist einen Motor und ein Getriebe 24 auf. Der Motor 24 treibt dabei über eine Welle 25 erste Exzenterhebel 26, 27 sowie feststehende Stirnräder 28, 29 an. Am Ende der Exzenterhebel 26, 27 sind zweite, kleinere Exzenterhebel 30, 31 drehbar gelagert.

Die Enden dieser Exzenterhebel 30, 31 sind wiederum mit Lagerzapfen 32, 33 an den Trägern 17, 18 gelagert. Der Antrieb der Exzenterhebel 30, 31 erfolgt über weitere Stirnräder 34, 35, 36, 37, die zusammen mit den Stirnrädern 28, 29 ein Getriebe mit dem Übersetzungsverhältnis 1:2 bilden.

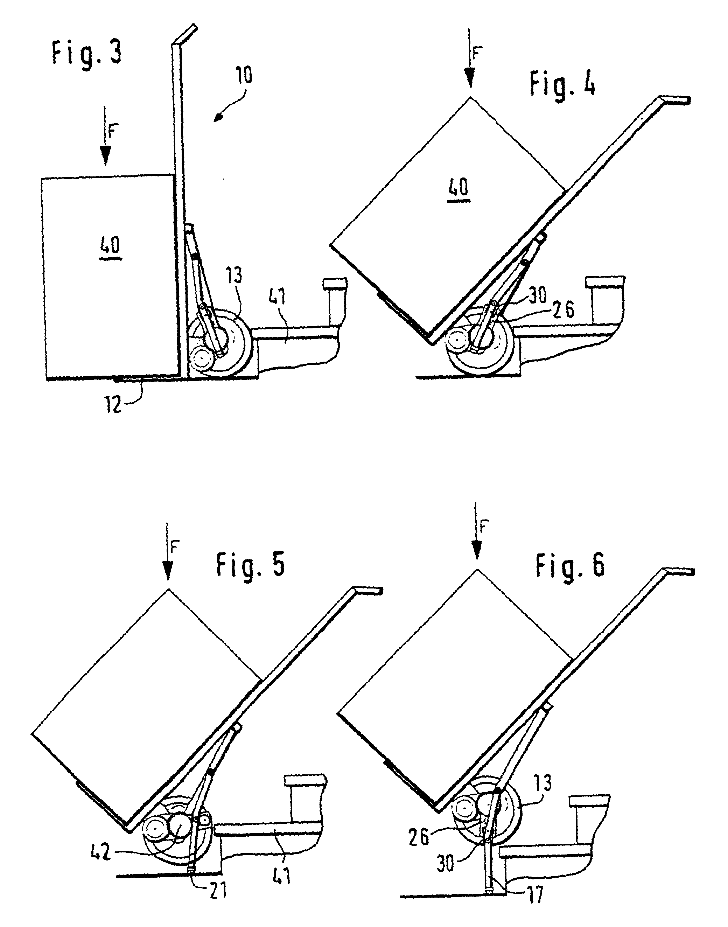

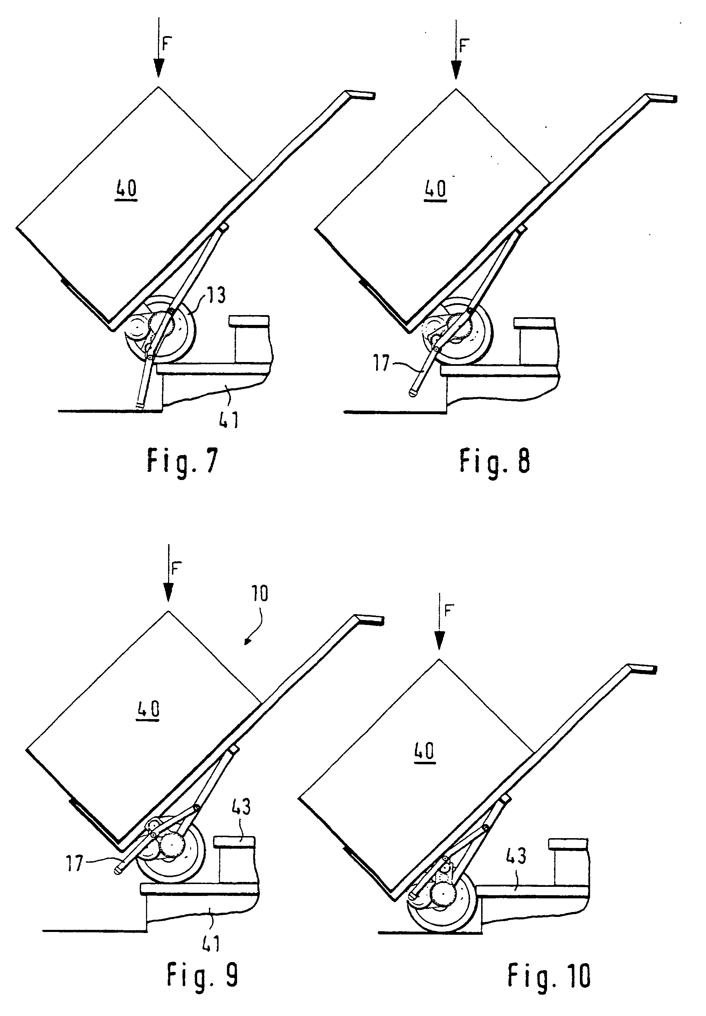

Die Funktionsweise der Treppensteigvorrichtung 23 ist in den Figuren 3 - 10 illustriert. Fig. 3 zeigt die Transportvorrichtung 10 mit einer Last 40 im Ruhezustand, d. h. mit auf dem Boden aufgesetzter Bodenplatte 12. Das Laufrad 13 befindet sich unmittelbar vor der Kante einer Treppenstufe 41. Gemäß Fig. 4 wird anschließend die Transportvorrichtung 10 geneigt und die Treppensteigvorrichtung aktiviert, d. h. der Motor 24 eingeschaltet. Hierdurch drehen sich der erste Exzenterhebel 28 sowie der zweite Exzenterhebel 30. Aufgrund des übersetzungsverhältnisses 1:2 führt dabei der zweite, kleinere Exzenterhebel 30 eine 180°-Drehung durch, wenn der erste Exzenterhebel 28 eine Drehung um 90° ausführt. Hierdurch ergibt sich die in Fig. 5 gezeigte Situation, in der der zweite Exzenterhebel 30 mit seinem Ende in Richtung auf den Drehpunkt 42 des Exzenterhebels 26 zeigt. In dieser Stellung ist der Stützfuß 21 bereits auf den Boden abgesenkt und stemmt die Vorrichtung 10 nach oben. In Fig. 6 hat die Transportvorrichtung 10 ihre höchste Stellung erreicht. Die beiden Exzenterhebel 26 und 30 sind nach unten gerichtet und addieren sich in ihrer Länge. Beim Weiterdrehen des Motors wird das Laufrad 13 horizontal über die Kante der Treppenstufe 41 bewegt und abgesetzt, wie Fig. 7 zeigt. Eine weitere Drehung des Motors bewirkt dann ein Hochziehen des Trägers 17, so daß er nicht an der Kante der Treppenstufe 41 hängenbleiben kann, wenn die Transportvorrichtung 10 in Richtung auf die nächste Treppenstufe 43 weiterbewegt wird (Fig. 9). Fig. 10 zeigt die Vorrichtung 10 dann beim Erreichen der Kante der nächsten Treppenstufe 43. Zur Überwindung dieser Treppenstufe 43 werden die in den Figuren 4 bis 9 gezeigten Schritte wiederholt. Soll die Vorrichtung 10 treppabwärts bewegt werden, so wird die Motorrichtung umgeschaltet und die Bewegungsfolge der Figuren 3 bis 10 in umgekehrter Reihenfolge durchgeführt.

Falls gewünscht, kann die Vorrichtung auch mit einer Bremse versehen werden.

## Patentansprüche

1. Transportvorrichtung mit an einem Gestell (11) angeordneten Laufrädern (13, 14) und einer elektromotorisch angetriebenen Treppensteigvorrichtung (23), wobei der Elektromotor (24) der Treppensteigvorrichtung (23) erste Exzenterhebel (26, 27) antreibt, an denen jeweils zweite Exzenterhebel (30, 31) drehbar gelagert sind, die mit ihren Enden an Trägern (17, 18) mit an ihrem unteren Ende angeordneten Stützfüßen (21, 22) oder -rollen drehbar gelagert sind, wobei die Träger (17, 18) linear an der Vorrichtung (10) geführt sind und zwischen den ersten und zweiten Exzenterhebeln (26, 30; 27, 31) Getriebe (28, 34, 36; 29, 35, 37) mit einem Übersetzungsverhältnis von 1:2 angeordnet sind.

2. Vorrichtung nach Anspruch 1, **dadurch gekennzeichnet, daß** die Getriebe (28, 34, 36; 29, 35, 37) Stirnradgetriebe sind.

3. Vorrichtung nach Anspruch 1, **dadurch gekennzeichnet, daß** die Getriebe (28, 34, 36; 29, 35, 37) Kettenradgetriebe sind.

4. Vorrichtung nach einem der Ansprüche 1 bis 3, **dadurch gekennzeichnet, daß** die Träger (17, 18) mittels Führungsrollen (19, 20) in Schienen (15, 16) an der Vorrichtung (10) geführt sind.

5. Vorrichtung nach einem der Ansprüche 1 bis 4, **dadurch gekennzeichnet, daß** die Träger (17, 18) im Bereich der Anlenkung (32, 33) der zweiten Exzenterhebel (30, 31) leicht abgewinkelt sind.

6. Vorrichtung nach einem der Ansprüche 1 bis 5, **dadurch gekennzeichnet, daß** die Laufräder (13, 14) an Achszapfen des Gestells (11) gelagert sind, während die Treppensteigvorrichtung (23) zwischen den Laufrädern (13, 14) am Gestell (11) angeordnet ist.

7. Vorrichtung nach einem der Ansprüche 1 bis 6, **dadurch gekennzeichnet, daß** die Exzenterhebel (26, 30; 27, 31) so bemessen sind, daß sie in radialer Richtung nicht über die Laufräder (13, 14) vorstehen.

## Claims

1. Transportation device, comprising running wheels (13, 14) arranged on a frame (11) and an electric-motor driven stair climbing device (23), **wherein** the electric motor (24) of the stair climbing device (23) drives first eccentric levers (26, 27) on which second eccentric levers (30, 31) are pivoted in each case, the ends of which second eccentric levers (30, 31 ) are pivoted on supports (17, 18) having support feet (21, 22) or rollers arranged at their lower ends, and wherein the supports (17, 18) are guided linearly on the device (10) and transmission elements (28, 34, 36; 29, 35, 37) having a transmission ratio of 1:2 are arranged between the first and second eccentric levers (26, 30; 27, 31).

2. Device according to claim 1, **characterised in that** the transmission elements (28, 34, 36; 29, 35, 37) are spur gears.

3. Device according to claim 1, **characterised in that** the transmission elements (28, 34, 36; 29, 35, 37) are chain-wheel transmission elements.

4. Device according to any one of claims 1 to 3, **characterised in that** the supports (17, 18) are guided by means of guide rollers (19, 20) in rails (15, 16) on the device (10).

5. Device according to any one of claims 1 to 4, **characterised in that** the supports (17, 18) are slightly angled in the region of their articulation to the second eccentric levers (30, 31 ).

6. Device according to any one of claims 1 to 5, **characterised in that** the running wheels (13, 14) are joumalled on stub-axles of the frame (11) while the stair climbing device (23) is arranged between the running wheels (13, 14) on the frame (11).

7. Device according to any one of claims 1 to 6, **characterised in that** the eccentric levers (26, 30; 27, 31) are dimensioned such that they do not project beyond the running wheels (13, 14) in the radial direction.

## Revendications

1. Dispositif de transport avec des roues de roulement (13, 14) disposées sur un bâti (11) et avec un dispositif monte-escalier à entraînement électromoteur (23), le moteur électrique (24) du dispositif monte-escalier (23) entraînant des premiers leviers excentriques (26, 27) sur lesquels sont montés à rotation respectivement des seconds leviers excentriques (30, 31) qui, par l'intermédiaire de leurs extrémités, sont montés à rotation sur des supports (17, 18) avec des pieds ou des roulettes d'appui (21, 22) disposés à leur extrémité inférieure, les supports (17, 18) étant guidés linéairement sur le dispositif (10), et des engrenages (28, 34, 36 ; 29, 35, 37) avec un rapport de transmission de 1:2 étant disposés entre les premier et second leviers excentriques (26, 30 ; 27, 31).

2. Dispositif selon la revendication 1, **caractérisé en ce que** les engrenages (28, 34, 36 ; 29, 35, 37) sont des engrenages à roues droites.

3. Dispositif selon la revendication 1, **caractérisé en ce que** les engrenages (28, 34, 36 ; 29, 35, 37) sont des engrenages à roues à chaîne.

4. Dispositif selon une des revendications 1 à 3, **caractérisé en ce que** les supports (17, 18) sont guidés dans des rails (15, 16) sur le dispositif (10) au moyen de galets de guidage (19, 20).

5. Dispositif selon une des revendications 1 à 4, **caractérisé en ce que** les supports (17, 18) sont coudés dans la zone de l'articulation (32, 33) des seconds leviers excentriques (30, 31).

6. Dispositif selon une des revendications 1 à 5, **caractérisé en ce que** les roues de roulement (13, 14) sont montées sur des tourillons du bâti (11), tandis que le dispositif monte-escalier (23) est disposé sur le bâti (11) entre les roues de roulement (13, 14).

7. Dispositif selon une des revendications 1 à 6, **caractérisé en ce que** les leviers excentriques (26, 30 ; 27, 31) sont dimensionnés de façon à ne pas dépasser des roues de roulement (13, 14) dans la direction radiale.
